# EUROPEAN PATENT SPECIFICATION

(11) **EP 2 727 695 B1**
(45) Date of publication and mention of the grant of the patent: **01.03.2017**
(21) Application number: 13191150.5
(22) Date of filing: 31.10.2013
(51) Int. Cl.: B29C 39/10

(54) **Process for preparing a molded article having partially embedded elements**
Verfahren zur Herstellung eines Formartikels mit teilweise eingebetteten Elementen
Procédé de préparation pour article moulé ayant des éléments partiellement encastrés

(30) Priority: 02.11.2012 IN MU31932012
(43) Date of publication of application: 07.05.2014
(73) Proprietor: Parekh, Chirag, 364002 Gujarat (IN)
(72) Inventor: Parekh, Chirag, 364002 Gujarat (IN)
(74) Representative: Zvesper, Thomas

(56) References cited:
- FR-A- 1 178 553
- JP-A-PH2001 025 957
- US-A- 5 736 081

## Description

### FIELD OF THE DISCLOSURE

The present disclosure relates to molded articles.

### BACKGROUND

Elements in molded articles are fixed or attached usually after molding the articles. In these methods, the elements are usually fixed in the molded articles by employing the method steps of cutting, drilling or any other similar methods. However, the molded articles prepared by using these conventional methods possess lots of drawbacks; for example these articles are more susceptible to stains, scale deposition, leakages, dirt accumulation and microbial contamination.

There is, therefore, felt a need to provide a molded article which alleviates aforesaid drawbacks allied with the conventional molded articles and additionally possesses improved properties such as strength, resistance to abrasion, resistance to temperature when a heated object is placed on it, resistance to bending and also possess good aesthetics and finish as desired.

JPH20 01025957 discloses a system in which abrasive grains are fitted to holes provided on the surface of a base mold. As occasion demands, the abrasive grains can be temporarily adhered to the base mold by use of an adhesive. Thereafter, a synthetic resin is filled in the base mold. The synthetic resin is filled in the space formed by fitting a cylindrical outer mold thereto, and pressed by use of a pressing punch. At this time, heating is performed with the pressing, whereby the synthetic resin is molded into the shape of a substrate, and the abrasive grains are fixed to the substrate thus formed by use of the synthetic resin. The base mold is removed, whereby a CMP conditioner comprising the substrate formed of the synthetic resin and the abrasive grains fixed to the substrate by the synthetic resin forming the substrate can be provided.

FR 1,178,553 describes a process for obtaining objects having a harsh or abrasive surface. The articles are manufactured with an abrasive or rough surface from a coated granular material and bonded by a metal, a ceramic or a plastic material acting as binder, the latter being injected under pressure liquid, paste into the mold for obtaining the desired object.

US 5,736,081 describes a method of forming a composite material including the steps of: providing a surface against which the composite material can be molded; providing a plurality of discrete filler particles; placing a plurality of discrete filler particles against the surface; preventing the particles from shifting freely along the surface; directing a liquified matrix material against the particles on the surface; and solidifying the matrix material to unite the discrete particles and matrix material into a composite structure.

### OBJECTS

Some of the objects of the present disclosure are described herein below:
It is an object of the present disclosure to ameliorate one or more problems of the prior art or to at least provide a useful alternative.

It is an object of the present disclosure to provide a molded article partially embedded with plurality of elements.

It is another object of the present disclosure to provide a molded article with improved properties that include improved strength, resistance to abrasion and resistance to temperature.

It is still another object of the present disclosure to provide a molded article that possesses good aesthetic and finish.

It is yet another object of the present disclosure to provide a process for embedding plurality of elements in the molded article.

It is a further object of the present disclosure to provide a process for embedding plurality of elements in the molded article while molding the molded article.

Other objects and advantages of the present disclosure will be more apparent from the following description when read in conjunction with the accompanying figures, which are not intended to limit the scope of the present disclosure.

### SUMMARY:

Aspects and embodiments of the present invention are set out in the claims.

In accordance with one aspect of the present disclosure there is provided a molded article, molded from aggregate comprising a resin matrix, and additives including particulate material, having plurality of elements, partially projecting from at least one show face thereof, characterized in that said elements are partially embedded in the article during the molding.

Typically, said elements are predetermined shaped materials made from at least one material selected from the group consisting of steel, copper, brass, aluminum, glass, acrylic, polyester, composite stone, natural granite, artificial granite and marble.

In accordance with another aspect of the present disclosure there is provided a process for preparing a molded article partially embedded with plurality of elements; said process comprising the following steps:
a. providing a mold;
b. removably attaching plurality of elements to at least one face of the mold in a predetermined pattern;
c. pouring molding aggregate into said mold;
d. allowing the poured aggregate to cure to form an article having plurality of elements projecting from at least one face of the article; and
e. detaching said article including plurality of elements from said mold.

Typically, the method step (b) is carried out using at least one adhesive selected from the group consisting of polyacrylonitrile, epoxy resins and cyanoacrylate adhesives.
Typically, the elements are predetermined shaped materials made from at least one material selected from the group consisting of steel, copper, brass, aluminum, glass, acrylic, polyester, composite stone, natural granite, artificial granite and marble.
Typically, the molding aggregate comprises a resin matrix and additives includino particulate material.

### BRIEF DESCRIPTION OF THE ACCOMPANYING DRAWINGS:

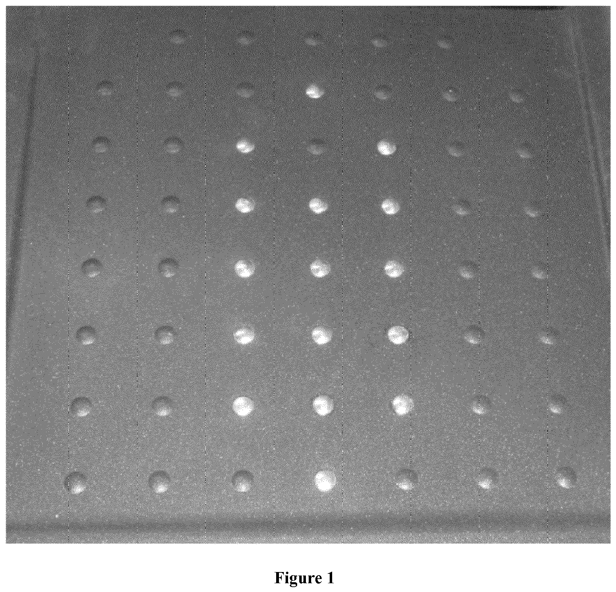

- **Figure 1**: illustrates a molded article embedded with elements.

### DETAILED DESCRIPTION:

Conventional methods for fixing elements in the molded articles require method steps of cutting, drilling and the like. However, the molded articles prepared using these conventional methods are susceptible to stains, scale depositions, leakages, microscopic depressions and micro pores. The microscopic depressions or micro pores not only reduce the aesthetic finish of the articles but also makes them un-hygienic due to accumulation of dirt and bacteria.

Therefore, in accordance with the present disclosure there is provided a simple process for partially embedding plurality of elements in a molded article. The elements are embedded during the method step of molding of the molded article.

The process of the present disclosure includes the following steps:
In the initial step, elements are attached to at least one face of a mold in a predetermined pattern and then a molding aggregate material is poured into the mold.

The elements that are embedded in the molded article of the present disclosure are predetermined shaped materials made from steel, copper, brass, aluminum, metal, non-metals, glass, acrylic, polyester, composite stone, solid surface, natural granite, artificial granite, stone marble and combinations thereof.

The elements in accordance with the process of the present disclosure are attached on the show face mold. Alternatively, the elements are attached on the back face mold.

In accordance with the present disclosure the elements are attached to the mold using one or more adhesives. Non-limiting examples of adhesives includes polyacrylonitrile, epoxy resins and cyanoacrylate adhesives.

The elements fixed the mold in accordance with the process of the present disclosure make strong bonding with the mold and do not detach from the molding surface during molding of the article.

The molding aggregate used in accordance the present disclosure includes but is not limited to resin matrix, particulate materials, additives and combinations thereof.

In the next step, the mold filled with the molding aggregate is cured to form the article having the plurality of elements projecting form at least one show face of the article.

In the further step, the mold is detached from the cured article having partially embedded elements.

The molded articles as illustrated in figure 1 and prepared in accordance with the process of the present disclosure include but are not limited to fixtures for example kitchen molded articles, bathroom basins, counters tops for kitchens, bathtubs, shower cubicles bases, and articles of a decorative or utility nature such as tiles for wall cladding and flooring.

The elements after molding gets partially embedded in the molded article so firmly that while separating the articles from the molds, the elements get easily removed from the mold. Further, no cavity or gaps are observed along the boundary between the elements and the molded article.

In accordance with the present disclosure there is also provided a molded article having plurality of partially embedded elements. The article is molded from an aggregate containing a resin matrix, and additives including particulate material. The elements used in the present disclosure are a predetermined shaped materials made from steel, copper, brass, aluminum, glass, acrylic, polyester, composite stone, natural granite, artificial granite and marble. The elements are embedded on the show face of the molded article.

The molded articles of the present disclosure possess improved properties that include but are not limited to strength, resistance to temperature when heated article is placed on it, resistance to bending. Further, the molded article of the present disclosure also possesses good aesthetic and finish.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the invention to achieve one or more of the desired objects or results.

Any discussion of documents, acts, materials, devices, articles or the like that has been included in this specification is solely for the purpose of providing a context for the invention. It is not to be taken as an admission that any or all of these matters form part of the prior art base or were common general knowledge in the field relevant to the invention as it existed anywhere before the priority date of this application.

The numerical values mentioned for the various physical parameters, dimensions or quantities are only approximations and it is envisaged that the values higher/lower than the numerical values assigned to the parameters, dimensions or quantities fall within the scope of the disclosure, unless there is a statement in the specification specific to the contrary.

### TECHNICAL ADVANTAGES:

The present disclosure related to a simple and efficient process for embedding elements in the molded article during molding of said articles and the molded articles embedded with elements produced therefrom has the following technical advantages:
(1) a molded article partially embedded with elements possesses improved properties that includes improved strength, resistance to temperature when heated article is placed on it, resistance to abrasion and resistance to bending; and
(2) a molded article partially embedded with elements possess good aesthetic and finish.

"Whenever a range of values is specified, a value up to 10 % below and above the lowest and highest numerical value respectively, of the specified range, is included in the scope of the disclosure".

While considerable emphasis has been placed herein on the preferred embodiments, it will be appreciated that many embodiments can be made and that many changes can be made in the preferred embodiments without departing from the principles of the disclosure. These and other changes in the preferred embodiments as well as other embodiments of the disclosure will be apparent to those skilled in the art from the disclosure herein, whereby it is to be distinctly understood that the forgoing descriptive matter to be implemented merely as illustrative of the disclosure and not as limitation.

## Claims

1. A process for preparing a molded article partially embedded with a plurality of elements, said process comprising the following steps:
a. providing a mold;
b. removably attaching, using polyacrylonitrile adhesive, a side of each of a plurality of elements to at least one face of the mold in a predetermined pattern, wherein the elements are predetermined shaped materials made from at least one material selected from the group consisting of steel, copper, brass, and aluminum;
c. pouring a molding aggregate in said mold;
d. allowing the poured molding aggregate to cure to form an article having said plurality of elements attached to at least one face of the article from another side of each of the plurality of elements; and
e. detaching said article including said plurality of elements from said mold.

2. The process as claimed in claim 1, wherein the molding aggregate comprises a resin matrix, one or more additives and particulate materials.

## Patentansprüche

1. Verfahren zum Herstellen eines Formkörpers, der teilweise in eine Vielzahl von Elementen eingebettet ist, wobei das Verfahren die folgenden Schritte umfasst:
a. Bereitstellen einer Form;
b. Ablösbares Befestigen einer Seite jedes der Vielzahl der Elemente an mindestens einer Fläche der Form in einem vorgegebenen Muster mit Hilfe von Polyacrylnitril-Kleber, wobei die Elemente vorgegebene geformte Materialien sind, die aus mindestens einem Material der Gruppe bestehend aus Stahl, Kupfer, Messing und Aluminium gefertigt sind;
c. Gießen eines Form-Zuschlagstoffs in die Form;
d. Aushärten des gegossenen Form-Zuschlagstoffs, um einen Körper auszubilden, bei dem die Vielzahl von Elemente an mindestens einer Fläche des Körpers von einer anderen Seite jedes der Vielzahl der Elemente aus befestigt ist; und
e. Herauslösen des Körpers einschließlich der Vielzahl der Elemente aus der Form.

2. Verfahren nach Anspruch 1, wobei der Form-Zuschlagstoff eine Harzmatrix, eine oder mehrere Zusätze und Feststoffe umfasst.

## Revendications

1. Un procédé permettant de préparer une pièce moulée partiellement intégrée à une pluralité d'éléments, le procédé en question comportant les étapes suivantes :
a. fournir un moule ;
b. fixer, de manière amovible à l'aide d'adhésif en polyacrylonitrile, un côté de chacun des divers éléments à au moins une face du moule selon un modèle prédéterminé, où les éléments correspondent à des matières de forme prédéterminée fabriquées à partir d'au moins une matière sélectionnée dans le groupe composé d'acier, de cuivre, de laiton et d'aluminium ;
c. verser un agrégat de moulage dans le moule en question ;
d. laisser l'agrégat de moulage versé durcir pour former une pièce où chacun des divers éléments mentionnés est fixé par un autre de ses côtés à au moins une des faces de la pièce ; et
e. détacher la pièce en question, y compris les divers éléments mentionnés, du moule.

2. Le procédé selon la revendication 1, dans lequel l'agrégat de moulage comprend une matrice en résine, un ou plusieurs additifs et des matériaux à particules.
